# EUROPEAN PATENT APPLICATION

(11) **EP 4 362 122 A1**
(43) Date of publication of application: **01.05.2024**
(21) Application number: 21946506.9
(22) Date of filing: 25.06.2021
(51) Int. Cl.: H01M 4/02

(54) **ELECTROCHEMICAL APPARATUS AND ELECTRONIC APPARATUS**

(71) Applicant: Ningde Amperex Technology Limited, Ningde, Fujian 352100 (CN)
(72) Inventor: YING, Dou, Ningde, Fujian 352100 (CN)
(74) Representative: Icosa
(86) International application number: PCT/CN2021/102397
(87) International publication number: WO 2022/267012

(57) **Abstract**

An electrochemical apparatus and an electronic apparatus including the electrochemical apparatus are disclosed. The electrochemical apparatus includes a positive electrode. The positive electrode includes a current collector, a conductive layer, and an active substance layer, with the conductive layer disposed between the current collector and the active substance layer, where the conductive layer includes secondary particles formed from primary particles of a conductive agent, and D50 of the secondary particles satisfies 0.1 µm ≤ D50 ≤ 0.4 µm. The thickness of the conductive layer in the positive electrode of the electrochemical apparatus is less than 1 µm, effectively increasing the compacted density and energy density of the electrochemical apparatus.

## Description

### TECHNICAL FIELD

This application relates to the field of energy storage, and specifically, to an electrochemical apparatus and an electronic apparatus.

### BACKGROUND

Lithium-ion batteries have been widely used due to their advantages such as high energy density, long cycle life, and low self-discharge. With the continuous advancement of technology, people have increasingly high requirements for energy density of lithium-ion batteries. How to improve the energy density of lithium-ion batteries has become a hot topic of research.

Currently, in the preparation of lithium-ion batteries, a primer layer is applied between an active substance layer and a current collector to increase the adhesion between the active substance layer and the current collector and reduce the sheet resistance of the electrode plate. The commonly used active substance for the primer layer is generally conductive carbon. The size of a single conductive carbon particle is about 70 nm to 110 nm. The interaction forces between nanoscale particles are large, making dispersion difficult. As a result, the particle size of the slurry prepared is generally at the micron level. The particle size of the slurry limits the coating thickness, reducing the compacted density and energy density of the battery to some extent, increasing additional costs, and reducing product competitiveness.

### SUMMARY

In view of the problems existing in the prior art, this application provides an electrochemical apparatus, the electrochemical apparatus having high energy density and good cycling performance.

According to a first aspect, this application provides an electrochemical apparatus. The electrochemical apparatus includes a positive electrode. The positive electrode includes a current collector, a conductive layer, and an active substance layer. The conductive layer is disposed between the current collector and the active substance layer, where the conductive layer includes secondary particles formed from primary particles of a conductive agent, and D50 of the secondary particles satisfies 0.1 µm ≤ D50 ≤ 0.4 µm. The electrochemical apparatus meeting the foregoing conditions can have the thickness of the conductive layer reduced to less than 1 µm and increase the energy density of the electrochemical apparatus while ensuring adhesion between the active substance layer and the current collector.

According to some embodiments of this application, D90 of the secondary particles satisfies 0.2 µm ≤ D90 ≤ 0.6 µm. Larger D50 and D90 of the secondary particles indicate a higher thickness of the conductive layer. An excessively high thickness of the conductive layer would reduce the compacted density and energy density of the electrochemical apparatus, reducing product competitiveness.

According to some embodiments of this application, the conductive layer further includes a first additive and a second additive, where the first additive includes at least one of polyether polyol or cellulose ether, and the second additive includes at least one of a polycarboxylic acid salt, polycarboxylate, or polycarboxylic acid. In this application, both the first additive and the second additive are bonded to the conductive agent, and intermolecular forces are present between the first additive and the second additive. The two additives collaborate to form a network bonding structure with different conductive agents. Under the action of shear force, this network-like bonding structure can effectively disperse the conductive agent to maintain the particle size of the conductive agent secondary particles in the final conductive layer at a small level.

According to some embodiments of this application, the electrochemical apparatus satisfies at least one of conditions (a) to (c): (a) a weight-average molecular weight of the first additive is 4×10⁵ to 8×10⁵; (a) a weight-average molecular weight of the second additive is 3×10⁵ to 6×10⁵; or (c) molecular weight distribution indexes of the first additive and the second additive are 1-2. An excessively low molecular weight of the additive can result in poor dispersion of the conductive agent, leading to a larger particle size of the secondary particles and thereby increasing the thickness of the conductive layer. An excessively large thickness of the conductive layer can reduce the energy density of the electrochemical apparatus and increase the internal resistance of the electrochemical apparatus, but this is not conducive to improving the kinetic performance of the electrochemical apparatus. An excessively large molecular weight of the additive can make the viscosity of the additive too high, resulting in high energy consumption of stirring and poor stirring effect.

According to some embodiments of this application, the polyether polyol includes at least one of trihydroxy polyether, polyoxyethylene phenyl ether, polyethylene glycol dimethyl ether, or polyether modified glycerol.

According to some embodiments of this application, the cellulose ether includes at least one of methyl cellulose, hydroxyethyl methyl cellulose, carboxymethyl cellulose, sodium carboxymethyl cellulose, ethyl cellulose, benzyl cellulose, hydroxyethyl cellulose, hydroxypropyl cellulose, cyanoethyl cellulose, benzyl cyanoethyl cellulose, carboxymethyl hydroxyethyl cellulose, or phenyl cellulose.

According to some embodiments of this application, the polycarboxylic acid salt includes structure unit A, the polycarboxylic acid includes structure unit B, and the polycarboxylate includes structure unit C or D, 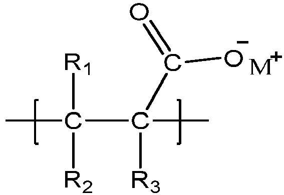 structure unit A 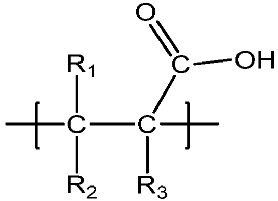 structure unit B 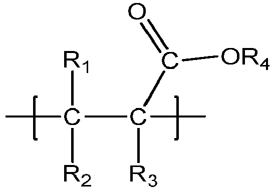 structure unit C 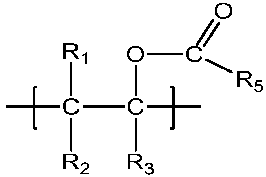 structure unit D

R₁ to R₃ are the same or different and each are independently selected from hydrogen or C₁-C₆ alkyl, R₄ and R₅ are the same or different and each are selected from C₁-C₆ alkyl or hydroxyl-substituted C₁-C₆ alkyl, and M is selected from alkali metals.

According to some embodiments of this application, the polycarboxylic salt includes at least one of sodium polyacrylate or sodium polymethacrylate, the polycarboxylic acid includes at least one of polyacrylic acid or polymethacrylic acid, and the polycarboxylate includes at least one of polyvinyl acetate, poly(2-hydroxyethyl methacrylate), or poly(isobutyl methacrylate).

According to some embodiments of this application, the electrochemical apparatus satisfies at least one of condition (d) or (e): (d) the conductive agent includes at least one of conductive carbon black, acetylene black, carbon fiber, carbon nanotubes, or Ketjen black; or (e) a specific surface area of the conductive agent is 50-100 m²/g. If the specific surface area of the conductive agent is too small, indicating that the particles of the conductive agent are large, the conductivity may be compromised. If the specific surface area of the conductive agent is too large, intermolecular forces between the conductive agent particles are strong, and this is not conducive to the dispersion of the conductive agent.

According to some embodiments of this application, based on a total mass of the conductive layer, a mass percentage of the conductive agent is 40-75%, a mass percentage of the first additive is 1-5%, and a mass percentage of the second additive is 20-55%. If the percentages of the first additive and the second additive are too low, the dispersion effect of the conductive agent is poor, resulting in larger secondary particles in the conductive layer, increased thickness of the conductive layer, and a lower volumetric energy density of the electrochemical apparatus. In addition, excessively low percentages make the additives have high rigidity and can affect the compacted density of the electrochemical apparatus. If the percentages of the first additive and the second additive are too high, the percentage of the conductive agent decreases accordingly, resulting in worse conductivity of the conductive layer and increased internal resistance of the electrochemical apparatus.

According to some embodiments of this application, a mass ratio of the first additive to the second additive is 1:4-1:50. Compared with the first additive, the second additive has lower rigidity and stronger adhesive properties. Therefore, a higher percentage of the second additive can further increase the energy density of the electrochemical apparatus.

According to some embodiments of this application, preparation of the conductive layer includes the following steps:
step A: mixing the conductive agent, the first additive, the second additive, and a solvent at a first solid content to obtain a conductive layer slurry, and
step B: diluting the conductive layer slurry obtained in step A to a second solid content, and then applying a resulting conductive layer slurry on the current collector.

The first solid content is 13-30%, and the second solid content is greater than or equal to 3%.

During preparation of the conductive layer, an excessively low first solid content in mixing results in insufficient shear force so that the conductive agent cannot be effectively dispersed, and an excessively high first solid content makes the load current of the mixer too high and may damage the mixer.

According to some embodiments of this application, the conductive layer satisfies at least one of the following conditions (f) to (h): (f) a thickness T of the conductive layer is 0.3-1.0 µm; (g) a thickness T of the conductive layer and the D90 of the secondary particles satisfy T ≥ 1.5×D90; or (h) a particle size distribution curve of the conductive layer is a unimodal distribution. In some embodiments, the thickness T of the conductive layer is 0.3-1.0 µm. An excessively high thickness of the conductive layer results in a reduced energy density of the electrochemical apparatus.

According to some embodiments of this application, the positive electrode satisfies at least one of the following conditions (i) to (l): (i) coverage of the conductive layer is 60-100%; (j) a coating weight of the conductive layer is 0.01-0.04 mg/cm²; (k) sheet resistance of the positive electrode is 0.05-5 S2; or (1) adhesion between the conductive layer and the active substance layer is 10-50 N/m.

According to some embodiments of this application, the coverage of the conductive layer in the positive electrode is 60-100%. An excessively small coverage of the conductive layer results in an excessively low percentage of the conductive agent and excessively weak adhesive properties in the conductive layer, thereby leading to increased electronic impedance of the electrochemical apparatus, degraded rate performance, and a dramatic drop in capacity during later cycles.

According to a second aspect, this application provides an electronic apparatus, including the electrochemical apparatus according to the first aspect.

In this application, with specific additives added to the conductive layer, the interaction between the additives and the conductive agent is utilized to improve the dispersion of the conductive agent particles, so that the secondary particles of the conductive agent in the conductive layer are maintained at the nanometer level and the thickness of the conductive layer is less than 1 µm. This effectively increases the compacted density and energy density of the electrochemical apparatus of this application.

### BRIEF DESCRIPTION OF DRAWINGS

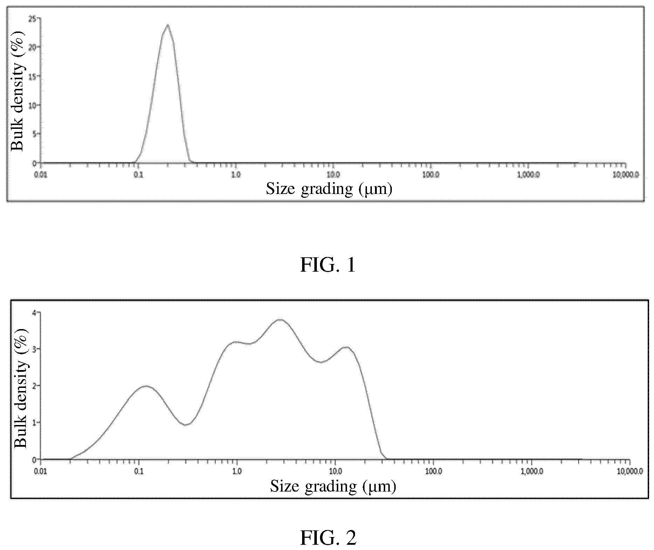

FIG. 1 is a particle size distribution curve graph of a conductive layer in a positive electrode of an electrochemical apparatus in Example 4-5 of this application.
FIG. 2 is a particle size distribution curve graph of a conductive layer in a positive electrode of an electrochemical apparatus in Comparative example 4-1 of this application.

### DESCRIPTION OF EMBODIMENTS

Embodiments of this application are described in detail below. The embodiments of this application should not be construed as limitations on the application.

The term "about" used herein are intended to describe and represent small variations. When used in combination with an event or a circumstance, the term may refer to an example in which the exact event or circumstance occurs or an example in which an extremely similar event or circumstance occurs. For example, when used in combination with a value, the term may refer to a variation range of less than or equal to ±10% of the value, for example, less than or equal to ±5%, less than or equal to ±4%, less than or equal to ±3%, less than or equal to ±2%, less than or equal to ±1%, less than or equal to ±0.5%, less than or equal to ±0.1%, or less than or equal to ±0.05%. In addition, quantities, ratios, and other values are sometimes presented in the format of ranges in this specification. It should be understood that such range formats are used for convenience and simplicity and should be flexibly understood as including not only values clearly designated as falling within the range but also all individual values or sub-ranges covered by the range as if each value and sub-range are clearly designated.

A list of items preceded by the term "at least one of" may mean any combination of the listed items. For example, if items A and B are listed, the phrase "at least one of A and B" means only A; only B; or A and B. In another example, if items A, B, and C are listed, the phrase "at least one of A, B, and C" means only A; only B; only C; A and B (exclusive of C); A and C (exclusive of B); B and C (exclusive of A); or all of A, B, and C. The item A may contain a single element or a plurality of elements. The item B may contain a single element or a plurality of elements. The item C may contain a single element or a plurality of elements.

In this specification, reference to "an embodiment", "some embodiments", "one embodiment", "another example", "an example", "a specific example", or "some examples" means that at least one embodiment or example in this application includes a specific feature, structure, material, or characteristic described in this embodiment or example. Therefore, descriptions in various places throughout this specification, such as "in some embodiments", "in the embodiments", "in an embodiment", "in another example", "in an example", "in a specific example", or "examples" do not necessarily refer to the same embodiment or example in this application. In addition, a specific feature, structure, material, or characteristic herein may be combined in any appropriate manner in one or more embodiments or examples.

According to a first aspect, this application provides an electrochemical apparatus including a positive electrode. The positive electrode includes a current collector, a conductive layer, and an active substance layer. The conductive layer is disposed between the current collector and the active substance layer, where the conductive layer includes secondary particles containing a conductive agent, and D50 of the secondary particles satisfies 0.1 µm ≤ D50 ≤ 0.4 µm. According to some embodiments of this application, D90 of the secondary particles satisfies 0.2 µm ≤ D90 ≤ 0.6 µm. Larger D50 and D90 of the secondary particles indicate a higher thickness of the conductive layer. An excessively high thickness of the conductive layer reduces the compacted density and energy density of the electrochemical apparatus, but increases extra costs and reduces product competitiveness.

According to some embodiments of this application, the D50 of the secondary particles is 0.12 µm, 0.14 µm, 0.16 µm, 0.18 µm, 0.20 µm, 0.22 µm, 0.24 µm, 0.26 µm, 0.28 µm, 0.30 µm, 0.31 µm, 0.33 µm, 0.35 µm, 0.37 µm, 0.39 µm, or a range defined by any two of these values. In some embodiments, the D50 of the secondary particles is 0.15-0.30 µm.

In some embodiments of this application, the D90 of the secondary particles is 0.22 µm, 0.25 µm, 0.27 µm, 0.30 µm, 0.33 µm, 0.35 µm, 0.38 µm, 0.40 µm, 0.42 µm, 0.45 µm, 0.47 µm, 0.50 µm, 0.53 µm, 0.55 µm, 0.57 µm, or a range defined by any two of these values. In some embodiments, the D90 of the secondary particles is 0.25-0.40 µm.

In this application, the term "secondary particles" refers to particles formed by agglomeration of primary particles of the conductive agent.

According to some embodiments of this application, the conductive layer further includes a first additive and a second additive. In some embodiments, the first additive includes at least one of polyether polyol or cellulose ether. In some embodiments, the second additive includes at least one of a polycarboxylic acid salt, polycarboxylate, or polycarboxylic acid. In this application, both the first additive and the second additive are added to the conductive layer, both the first additive and the second additive are bonded to the conductive agent, and intermolecular forces, for example, force between the hydroxyl of the first additive and the carboxyl of the second additive, are present between the first additive and the second additive. The two additives collaborate to form a network bonding structure with different conductive agents. Under the action of shear force, this network-like bonding structure can effectively disperse the conductive agent to maintain the particle size of the secondary particles of the conductive agent in the final conductive layer at a small level, thereby further reducing the thickness of the conductive layer, and enhancing the compacted density and energy density of the electrochemical apparatus including the conductive layer.

According to some embodiments of this application, the weight-average molecular weight of the first additive is 4×10⁵ to 8×10⁵. In some embodiments, the weight-average molecular weight of the first additive is 4.1×10⁵, 4.3×10⁵, 4.5×10⁵, 4.7×10⁵, 4.9×10⁵, 5×10⁵, 5.2×10⁵, 5.4×10⁵, 5.5×10⁵ 5.7×10⁵, 5.9×10⁵, 6×10⁵, 6.2×10⁵, 6.5×10⁵, 6.7×10⁵, 7×10⁵, 7.2×10⁵, 7.4×10⁵, 7.6×10⁵, 7.8×10⁵, or a range defined by any two of these values.

According to some embodiments of this application, the weight-average molecular weight of the second additive is 3×10⁵ to 6×10⁵. In some embodiments, the weight-average molecular weight of the first additive is 3.1×10⁵, 3.3×10⁵, 3.5×10⁵, 3.7×10⁵, 3.9×10⁵, 4×10⁵, 4.2×10⁵, 4.4×10⁵, 4.5×10⁵, 4.7×10⁵, 4.9×10⁵, 5×10⁵, 5.2×10⁵, 5.5×10⁵, 5.7×10⁵, 5.9×10⁵, or a range defined by any two of these values. In the conductive layer slurry, the molecular chain segments of the additives can bond with different conductive agents. The molecular chain segments bonded to different conductive agent agglomerates, when subjected to the pulling action of shear forces, can separate the conductive agent agglomerates, thereby achieving effective dispersion of the conductive agent. An excessively low molecular weight of the additive, indicating short molecular chain segments and a low quantity of molecular chain segments bonded with the conductive agent, can result in poor dispersion of the conductive agent, leading to a larger particle size of the secondary particles and thereby increasing the thickness of the conductive layer. An excessively large thickness of the conductive layer can reduce the energy density of the electrochemical apparatus and increase the internal resistance of the electrochemical apparatus, but this is not conducive to improving the kinetic performance of the electrochemical apparatus. An excessively large molecular weight of the additive can make the viscosity of the additive too high, resulting in high energy consumption of stirring and poor stirring effect.

According to some embodiments of this application, the first additive includes polyether polyol, the polyether polyol including at least one of trihydroxy polyether, polyoxyethylene phenyl ether, polyethylene glycol dimethyl ether, or polyether modified glycerol.

According to some embodiments of this application, the first additive includes cellulose ether, the cellulose ether including at least one of methyl cellulose, hydroxyethyl methyl cellulose, carboxymethyl cellulose, sodium carboxymethyl cellulose, ethyl cellulose, benzyl cellulose, hydroxyethyl cellulose, hydroxypropyl methyl cellulose, cyanoethyl cellulose, benzyl cyanoethyl cellulose, carboxymethyl hydroxyethyl cellulose, or phenyl cellulose.

In some embodiments of this application, the first additive includes at least one of trihydroxy polyether, polyoxyethylene phenyl ether, polyethylene glycol dimethyl ether, polyether modified glycerol, sodium carboxymethyl cellulose, hydroxypropyl cellulose, or ethyl cellulose. The hydroxyl in the first additive can increase the wettability and, additionally, can bond with the carboxyl in the second additive, helping to form a cross-linked network between the additive and the conductive agent.

According to some embodiments of this application, the second additive includes polycarboxylic acid salt. The polycarboxylic acid salt includes the following structure unit A: 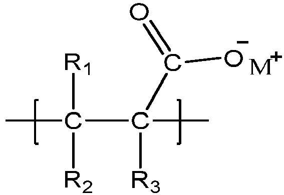 structure unit A,
where R₁ to R₃ are the same or different and each are independently selected from hydrogen or C₁-C₆ alkyl, and M is selected from alkali metals. In some embodiments, R₁ to R₃ are the same or different and each are independently selected from hydrogen, methyl, ethyl, n-propyl, isopropyl, n-butyl, isobutyl, sec-butyl, or tert-butyl, and M is sodium or potassium. In some embodiments, the polycarboxylic acid salt includes at least one of sodium polyacrylate or sodium polymethacrylate.

According to some embodiments of this application, the second additive includes polycarboxylic acid. The polycarboxylic acid includes the following structure unit B: 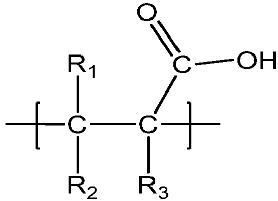 structure unit B,
where R₁ to R₃ are the same or different and each are independently selected from hydrogen or C₁-C₆ alkyl. In some embodiments, R₁ to R₃ are the same or different and each are independently selected from hydrogen, methyl, ethyl, n-propyl, isopropyl, n-butyl, isobutyl, sec-butyl, or tert-butyl. In some embodiments, the polycarboxylic acid includes at least one of polyacrylic acid or polymethacrylic acid.

According to some embodiments of this application, the second additive includes polycarboxylate. The polycarboxylate includes the following structure unit C: 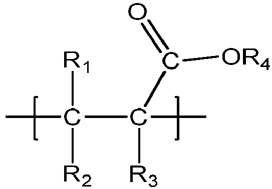 structure unit C,
where R₁ to R₃ are the same or different and each are independently selected from hydrogen or C₁-C₆ alkyl, R₄ is selected from C₁-C₆ alkyl or hydroxyl-substituted C₁-C₆ alkyl. In some embodiments, R₁ to R₃ are the same or different and each are independently selected from hydrogen, methyl, ethyl, n-propyl, isopropyl, n-butyl, isobutyl, sec-butyl, or tert-butyl. R₄ is selected from methyl, ethyl, n-propyl, isopropyl, n-butyl, isobutyl, sec-butyl, tert-butyl, hydroxyl-substituted methyl, hydroxyl-substituted ethyl, or hydroxyl-substituted propyl. In some embodiments, the polycarboxylate includes at least one of poly(2-hydroxyethyl methacrylate) or poly(isobutyl methacrylate).

According to some embodiments of this application, the second additive includes polycarboxylate. The polycarboxylate includes the following structure unit D: 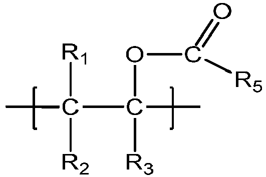 structure unit D,
where R₁ to R₃ are the same or different and each are independently selected from hydrogen or C₁-C₆ alkyl, R₅ is selected from C₁-C₆ alkyl or hydroxyl-substituted C₁-C₆ alkyl. In some embodiments, R₁ to R₃ are the same or different and each are independently selected from hydrogen, methyl, ethyl, n-propyl, isopropyl, n-butyl, isobutyl, sec-butyl, or tert-butyl. R₅ is selected from methyl, ethyl, n-propyl, isopropyl, n-butyl, isobutyl, sec-butyl, tert-butyl, hydroxyl-substituted methyl, hydroxyl-substituted ethyl, or hydroxyl-substituted propyl. In some embodiments, the polycarboxylate includes polyvinyl acetate.

According to some embodiments of this application, the second additive includes at least one of sodium polyacrylate, sodium polymethacrylate, polyacrylic acid, polymethacrylic acid, polyvinyl acetate, poly(2-hydroxyethyl methacrylate), or poly(isobutyl methacrylate). The carboxyl in the second additive can bond with the residual oxygen-containing functional groups on the conductive agent and, additionally, can bond with the hydroxyl in the first additive, helping to form a cross-linked network between the additive and the conductive agent.

According to some embodiments of this application, the conductive agent includes at least one of conductive carbon black, acetylene black, carbon fiber, carbon nanotubes, or Ketjen black.

According to some embodiments of this application, the specific surface area of the conductive agent is 50-100 m²/g. In some embodiments, the specific surface area of the conductive agent is 55 m²/g, 60 m²/g, 65 m²/g, 70 m²/g, 75 m²/g, 80 m²/g, 85 m²/g, 90 m²/g, 95 m²/g, or a range defined by any two of these values. If the specific surface area of the conductive agent is too small, indicating that the particles of the conductive agent are large, the conductivity may be compromised. If the specific surface area of the conductive agent is too large, intermolecular forces between the conductive agent particles are strong, and this is not conducive to the dispersion of the conductive agent.

According to some embodiments of this application, based on a total mass of the conductive layer, the mass percentage of the conductive agent is 40-75%. In some embodiments, the mass percentage of the conductive agent is 42%, 45%, 47%, 50%, 53%, 55%, 57%, 59%, 62%, 65%, 67%, 69%, 71%, 73%, or a range defined by any two of these values. An excessively low percentage of the conductive agent results in worse conductivity of the conductive layer and increased electronic impedance of the electrochemical apparatus. An excessively high percentage of the conductive agent results in insufficient adhesive properties in the conductive layer, leading to reduced safety performance of the electrochemical apparatus.

According to some embodiments of this application, the mass percentage of the first additive is 1-5%. In some embodiments, the mass percentage of the first additive is 1.5%, 2.0%, 2.5%, 3.0%, 3.5%, 4.5%, 4.5%, or a range defined by any two of these values.

According to some embodiments of this application, the mass percentage of the second additive is 20-55%. The mass percentage of the second additive is 25%, 30%, 35%, 40%, 45%, 50%, or a range defined by any two of these values. If the percentages of the first additive and the second additive are too low, the dispersion effect of the conductive agent is poor, resulting in larger secondary particles in the conductive layer, increased thickness of the conductive layer, and a lower volumetric energy density of the electrochemical apparatus. In addition, excessively low percentages make the additives have high rigidity and can affect the compacted density of the electrochemical apparatus. If the percentages of the first additive and the second additive are too high, the percentage of the conductive agent decreases accordingly, resulting in worse conductivity of the conductive layer and increased internal resistance of the electrochemical apparatus.

According to some embodiments of this application, the mass ratio of the first additive to the second additive is 1:4-1:50. In some embodiments, the mass ratio of the first additive to the second additive is 1:5, 1:10, 1:15, 1:20, 1:25, 1:30, 1:35, 1:40, 1:45, or a range defined by any two of these values. Compared with the first additive, the second additive has lower rigidity and stronger adhesive properties. Therefore, a higher percentage of the second additive can further increase the energy density of the electrochemical apparatus.

According to some embodiments of this application, preparation of the conductive layer includes the following steps:
step A: mixing the conductive agent, the first additive, the second additive, and a solvent at a first solid content to obtain a conductive layer slurry, and
step B: diluting the conductive layer slurry obtained in step A to a second solid content, and then applying a resulting conductive layer slurry on the current collector.

The first solid content is 13-30%, and the second solid content is greater than or equal to 3%. In some embodiments, the first solid content is 15%, 17%, 19%, 20%, 21%, 23%, 25%, or a range defined by any two of these values. In some embodiments, the second solid content is greater than or equal to 3% and less than the first solid content, for example, being 3-10%. During preparation of the conductive layer, an excessively low first solid content in mixing results in insufficient shear force so that the conductive agent cannot be effectively dispersed, and an excessively high first solid content makes the load current of the mixer too high and may damage the mixer. In some embodiments, the solvent is water.

According to some embodiments of this application, the thickness T of the conductive layer is 0.3-1.0 µm, for example, 0.4 µm, 0.5 µm, 0.6 µm, 0.7 µm, 0.8 µm, 0.9 µm, or a range defined by any two of these values. An excessively high thickness of the conductive layer can result in a reduced energy density of the electrochemical apparatus.

According to some embodiments of this application, the thickness T of the conductive layer and the D90 of secondary particles of the conductive layer satisfy T ≥ 1.5×D90. According to some embodiments of this application, the particle size distribution curve of the conductive layer is a unimodal distribution.

According to some embodiments of this application, the coverage of the conductive layer of the positive electrode is 60-100%, for example, 65%, 70%, 75%, 80%, 85%, 90%, 95%, or a range defined by any two of these values. An excessively small coverage of the conductive layer can result in an excessively low percentage of the conductive agent and excessively weak adhesive properties in the conductive layer, thereby leading to increased electronic impedance of the electrochemical apparatus, degraded rate performance, and a dramatic drop in capacity during later cycles. The coverage of the conductive layer in this application represents the degree of coverage of the conductive layer on the current collector.

According to some embodiments of this application, a coating weight of the conductive layer of the positive electrode is 0.01-0.04 mg/cm², for example, 0.015 mg/cm², 0.02 mg/cm², 0.025 mg/cm², 0.03 mg/cm², 0.035 mg/cm², or a range defined by any two of these values. An excessively small coating weight of the conductive layer can result in small coverage, leading to increased electronic impedance of the electrochemical apparatus and degraded rate performance. An excessively high coating weight of the conductive layer results in an excessively high thickness of the conductive layer, leading to a low energy density of the electrochemical apparatus.

According to some embodiments of this application, the sheet resistance of the positive electrode is 0.05-5 Q, for example, 0.5 Q, 1.0 S2, 1.5 S2, 2.0 S2, 2.5 Q, 3.0 S2, 3.5 Q, 4.0 S2, 4.5 Q, or a range defined by any two of these values. According to some embodiments of this application, the adhesion between the conductive layer and the active substance layer of the positive electrode is 10-50 N/m, for example, 15 N/m, 20 N/m, 25 N/m, 30 N/m, 35 N/m, 40 N/m, 45 N/m, or a range defined by any two of these values.

According to some embodiments of this application, the active substance layer includes a positive electrode active substance. The positive electrode active substance in this application may include at least one of lithium nickel cobalt manganese oxide (811, 622, 523, 111), lithium nickel cobalt aluminate, lithium iron phosphate, lithium-rich manganese-based materials, lithium cobalt oxide, lithium manganate, lithium iron manganese phosphate, or lithium titanate.

According to some embodiments of this application, the current collector may be a metal foil current collector or a composite current collector. For example, an aluminum foil may be used. The composite current collector may be formed by depositing a metal material (copper, copper alloy, nickel, nickel alloy, titanium, titanium alloy, silver, silver alloy, or the like) on a polymer matrix.

The electrochemical apparatus in this application further includes a negative electrode. The material, composition and preparation method of a negative electrode used in the electrochemical apparatus according to this application may include any technology disclosed in the prior art.

According to some embodiments of this application, the negative electrode includes a negative electrode current collector and a negative electrode active material layer.

According to some embodiments of this application, the negative electrode active material layer includes a negative electrode active material. The negative electrode active material may include a material that reversibly intercalates or deintercalates lithium ions, a lithium metal, a lithium metal alloy, a material capable of doping/dedoping lithium, or a transition metal oxide, for example, materials such as Si and SiOx (0 < x < 2). The material reversibly intercalating and deintercalating lithium ions may be a carbon material. The carbon material may be any carbon-based negative electrode active substance commonly used in a lithium-ion rechargeable electrochemical apparatus. For example, the carbon material includes crystalline carbon, amorphous carbon, and combinations thereof. The crystalline carbon may be amorphous or plate-shaped, flake-shaped, spherical or fiber-shaped natural graphite or artificial graphite. The amorphous carbon may be soft carbon, hard carbon, a mesophase pitch carbonization product, burnt coke, or the like. Both low crystalline carbon and high crystalline carbon can be used as the carbon material. The low crystalline carbon material may generally include soft carbon and hard carbon. The high crystalline carbon material may generally include natural graphite, crystalline graphite, pyrolytic carbon, a mesophase pitch-based carbon fiber, mesophase carbon microbeads, mesophase pitch, and high-temperature calcined carbon (such as petroleum or coke derived from coal tar pitch).

According to some embodiments of this application, the negative electrode active material layer includes a binder, and the binder may include various binder polymers, for example, polyvinylidene fluoride-co-hexafluoropropylene (PVDF-co-HFP), polyvinylidene fluoride, polyacrylonitrile, polymethyl methacrylate, polyvinyl alcohol, carboxymethyl cellulose, hydroxypropyl cellulose, polyvinyl chloride, carboxylated polyvinyl chloride, polyvinyl fluoride, a polymer containing ethylene oxide, polyvinylpyrrolidone, polyurethane, polytetrafluoroethylene, polyethylene, polypropylene, styrene-butadiene rubber, acrylic styrene-butadiene rubber, epoxy resin, and nylon, but is not limited thereto.

According to some embodiments, the negative electrode active material layer further includes a conductive material to improve electrode conductivity. Any conductive material causing no chemical change can be used as the conductive material. For example, the conductive material includes: a carbon-based material such as natural graphite, artificial graphite, carbon black, acetylene black, Ketjen black, and carbon fiber; a metal-based material such as metal powder or metal fiber including copper, nickel, aluminum, silver; a conductive polymer such as a polyphenylene derivative; or any mixture thereof. The current collector may be copper foil, nickel foil, stainless steel foil, titanium foil, nickel foam, copper foam, a polymer substrate coated with a conductive metal, or a combination thereof.

The electrochemical apparatus further includes an electrolyte. The electrolyte includes a lithium salt and a non-aqueous solvent.

In some embodiments of this application, the lithium salt is one or more selected from a group consisting of LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, LiSiF₆, LiBOB, or lithium difluoroborate. For example, LiPF₆ may be selected as the lithium salt because it can provide high ionic conductivity and improve the cycle performance.

The non-aqueous solvent may be a carbonate compound, a carboxylate compound, an ether compound, another organic solvent, or a combination thereof.

The carbonate compound may be a linear carbonate compound, a cyclic carbonate compound, a fluorocarbonate compound, or a combination thereof.

An instance of the linear carbonate compound is dimethyl carbonate (DMC), diethyl carbonate (DEC), dipropyl carbonate (DPC), methyl propyl carbonate (MPC), ethylene propyl carbonate (EPC), methyl ethyl carbonate (MEC), or a combination thereof. An instance of the cyclic carbonate compound is ethylene carbonate (EC), propylene carbonate (PC), butylene carbonate (BC), vinyl ethylene carbonate (VEC), and a combination thereof. An instance of the fluorocarbonate compound is fluoroethylene carbonate (FEC), 4,5-difluoro-1,3-dioxolan-2-one, 4,4-difluoro-1,3-dioxolan-2-one, 4,4,5-trifluoro-1,3-dioxolan-2-one, 4,4,5,5-tetrafluoro-1,3-dioxolan-2-one, 4-fluoro-5-methyl-1,3-dioxolan-2-one, 4-fluoro-4-methyl-1,3-dioxolan-2-one, 4,5-difluoro-4-methyl-1,3-dioxolan-2-one, 4,4,5-trifluoro-5-methyl-1,3-dioxolan-2-one, 4-trifluoroMethyl ethylence carbonate, and a combination thereof.

An instance of the carboxylate compound is methyl formate, methyl acetate, ethyl acetate, n-propyl acetate, tert-butyl acetate, methyl propionate, ethyl propionate, propyl propionate, γ-butyrolactone, decanolide, valerolactone, mevalonolactone, caprolactone, and a combination thereof.

An instance of the ether compound is dibutyl ether, tetraglyme, diglyme, 1,2-dimethoxyethane, 1,2-diethoxyethane, ethoxymethoxy ethane, 2-methyltetrahydrofuran, tetrahydrofuran, and a combination thereof.

An instance of the another organic solvent is dimethyl sulfoxide, 1,2-dioxolane, sulfolane, methyl-sulfolane, 1,3-dimethyl-2-imidazolidinone, N-methyl-2-pyrrolidone, methylamide, dimethylformamide, acetonitrile, trimethyl phosphate, triethyl phosphate, trioctyl phosphate, phosphate ester, and a combination thereof.

The electrochemical apparatus in this application further includes a separator. A material and shape of the separator are not particularly limited, and any technology disclosed in the prior art may be used for the separator. In some embodiments, the separator includes a polymer or an inorganic substance formed by a material stable to the electrolyte of this application.

For example, the separator may include a substrate layer and a surface treatment layer. The substrate layer is a non-woven fabric, a membrane, or a composite membrane having a porous structure, and a material of the substrate layer is selected from at least one of polyethylene, polypropylene, polyethylene terephthalate, or polyimide. Specifically, a polypropylene porous membrane, a polyethylene porous membrane, a polypropylene non-woven fabric, a polyethylene non-woven fabric, or a polypropylene-polyethylene-polypropylene porous composite membrane may be selected.

The surface treatment layer is provided on at least one surface of the substrate layer, and the surface treatment layer may be a polymer layer or an inorganic substance layer, or may be a layer formed by mixing a polymer and an inorganic substance.

The inorganic substance layer includes inorganic particles and the binder. The inorganic particles are selected from at least one of aluminum oxide, silicon oxide, magnesium oxide, titanium oxide, hafnium oxide, tin oxide, ceria oxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder is selected from at least one of polyvinylidene fluoride, a vinylidene fluoride-hexafluoropropylene copolymer, polyamide, polyacrylonitrile, polyacrylate, polyacrylic acid, polyacrylate, polyvinylpyrrolidone, polyvinyl ether, polymethyl methacrylate, polytetrafluoroethylene, or polyhexafluoropropylene.

The polymer layer includes a polymer, and a material of the polymer is selected from at least one of polyamide, polyacrylonitrile, an acrylate polymer, polyacrylic acid, polyacrylate, polyvinylpyrrolidone, polyvinyl ether, polyvinylidene fluoride, or poly(vinylidene fluoride-hexafluoropropylene).

According to a second aspect, this application provides an electronic apparatus, including the electrochemical apparatus according to the first aspect.

The electronic device or apparatus in this application is not particularly limited. In some embodiments, the electronic device of this application includes, but is not limited to: a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a memory card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, a lithium-ion capacitor, or the like.

This application is further described below with reference to examples. It should be understood that these examples are merely used to describe this application but not to limit the scope of this application.

### Test method

1. Particle size test for conductive layer: disassembled a cell to obtain an electrode plate, washed and dried the electrode plate, removed the active layer therefrom either by washing with NMP or by using adhesive tape, and then dissolved the conductive layer in deionized water to obtain a to-be-tested slurry; tested the to-be-tested slurry by using a Malvern laser particle size analyzer, specifically, selected the Hydro SM Starter Sample (SOP) mode, with deionized water as a solvent, rotation speed set to 2800±400 rpm, and refractive index set to 1.52; and measured the pure solution (deionized water), subtracted the background, took the to-be-tested slurry by using a dropper and slowly added the slurry dropwise until a target dripping amount reached (turned green), and then clicked Test.
2. Thickness test for conductive layer: disassembled a cell to obtain an electrode plate, washed and dried the electrode plate, removed the active layer therefrom either by washing with NMP or by using adhesive tape, then measured the total thickness of the current collector and the primer conductive layer by using a micrometer; and performed single-point measurements and took an average of 15 points; and obtained the thickness of the conductive layer by subtracting the thickness of the current collector from the total thickness of the current collector and the primer conductive layer. The following formula was used to calculate the thickness of the conductive layer: T = (T1+T2+T3+...+T15)/15-T (current collector).
3. Coverage test for conductive layer: disassembled a cell to obtain an electrode plate, washed and dried the electrode plate, removed the active layer therefrom either by washing with NMP or by using adhesive tape, and then performed a test using a CCD detector. Specifically, focusing was performed first, after the fine-tuning nut was adjusted for clarity, an optical image was taken, and then the automatic area measurement was selected, with parameters specifically set to dark area, threshold 60, brightness -20, and magnification × 50. A coverage report was available after the test was completed.
4. Calculation of conductive layer weight: disassembled a cell to obtain an electrode plate, washed and dried the electrode plate, removed the active layer therefrom either by washing with NMP or by using adhesive tape, and then cut the electrode plate into small squares with an area of 86×85.2 mm² by using a special mold and weighed a small square, with the weight denoted as M_{current collector+conductive layer} in mg; then wiped off the conductive layer and weighed the current collector, with the weight denoted as m_{current collector} in mg; and conductive layer weight = (M_{current collector+conductive layer}-m_{current collector})×100/(86×85.2)
5. Sheet resistance measurement: disassembled a cell to obtain an electrode plate, cleaned off the electrolyte with DMC solution, and used a properly wiped and cleaned sheet resistance meter for testing. Specifically, the electrode plate was flattened, then at a midpoint 25 mm away from an edge and an uncoated region, the resistance value of a coated region was measured, and an average was taken for 15 measurements. The testing conditions included single-point mode, pressure of 0.4T, and a testing time of 5 seconds per point.
6. Adhesion test: disassembled a cell to obtain an electrode plate and cleaning off the electrolyte with DMC solution for sample preparation; cut the electrode plate into electrode plate samples first, each sample with a width of 30 mm and a length of 100-160 mm, pasted a special double-sided tape on the steel plate, the tape having a width of 20 mm and a length of 90-150 mm, and pasted the cut electrode plate sample on the double-sided tape, with a test surface facing downward; then inserted paper tape with a width equal to that of the electrode plate and a length 80-200 mm greater than that of the sample under the electrode plate and fastened the paper tape using crepe tape; and tested the prepared sample using a Gotech tensile machine, secured the steel plate, clamped the paper tape with the tensile machine, pulled the paper tape at a speed of 50 mm/min, and recorded the force and displacement parameters to obtain an adhesion value. Five measurements were performed for each group to take an average.
7. Cell internal resistance (IMP) test for lithium-ion battery: took a to-be-tested cell, connected two tabs of the cell respectively, and measured a current I passing through the cell and an applied voltage V to obtain an internal resistance of the cell, R = V/I.
8. Volumetric energy density (ED) test for lithium-ion battery: took a to-be-tested cell, charged the cell to 4.48 V with a current of 1.5C under normal temperature, then charged the cell to 0.05C with a constant voltage of 4.48 V; left the cell to stand for 5 minutes, then discharged the cell to 3.0 V with a constant current of 0.025C, left the cell to stand for 5 minutes, and recorded the capacity at this moment as D in mAh; then charged the cell to 4.0 V at 1.0C, measured the length, width, and thickness of the cell at this moment to calculate the cell volume V in mm³ so that the volumetric energy density was calculated as: ED = (D×3.89×1000)/V, in unit of Wh/L.

### Examples and comparative examples

1. Preparation of positive electrode plate: A conductive agent, a first additive, a second additive, and solvent water were added to a double-planetary mixer for stirring and dispersed at a first solid content to obtain a conductive layer slurry. The conductive layer slurry was diluted with water to a second solid content, then a resulting conductive layer slurry was applied onto the current collector (aluminum foil) through a gravure machine to obtain a current collector coated with a conductive layer. Next, an active material slurry (the active material slurry was obtained by stirring and mixing lithium cobalt oxide, acetylene black, and polyvinylidene fluoride at a weight ratio of 96:2:2 in an appropriate amount of N-methylpyrrolidone solvent) was applied on the current collector with the conductive layer to form an active substance layer, followed by drying and cold pressing, to obtain a positive electrode plate. The conductive agent was conductive carbon. The first additive was sodium carboxymethyl cellulose, and the second additive was sodium polyacrylate. The specific compositions of the conductive agent, first additive, and second additive in each example and comparative example are detailed in Tables 1 to 4 below.
2. Preparation of negative electrode plate: Graphite, polymethacrylic acid, and styrene-butadiene rubber were stirred and well mixed at a weight ratio of 98:1:1 in an appropriate amount of deionized water solvent to form a uniform negative electrode slurry. The prepared negative electrode slurry was applied onto the copper foil current collector, followed by drying and cold pressing, to obtain a negative electrode plate.
3. Preparation of lithium-ion battery: The positive electrode plate, separator, and negative electrode plate were stacked in sequence so that the separator was located between the positive electrode and the negative electrode for separation. The resulting stack was wound to obtain a jelly roll. The jelly roll was placed into an outer package, and after drying under vacuum, an electrolyte was injected into the package and then the package was sealed. After processes such as formation, degassing, and trimming, a lithium-ion battery was obtained. PE with a thickness of 7 µm was used as a separator. The electrolyte included LiPF₆ with a concentration of about 1.15 mol/L and a solvent obtained by mixing propylene carbonate (PC), ethylene carbonate (EC), and diethyl carbonate (DEC) (at a weight ratio of about 1:1:1).

Table 1 shows the influences of the weight-average molecular weight of the first additive (sodium carboxymethyl cellulose), the weight-average molecular weight of the second additive (sodium polyacrylate), and the specific surface area of the conductive agent (conductive carbon) on a positive electrode plates prepared and a lithium-ion battery containing the positive electrode plate.

In the examples and comparative examples, the first solid content is 15%, and the second solid content is greater than or equal to 3%. The molecular weight distribution index of the first additive is 1-2, and the molecular weight distribution index of the second additive is 1-2.

Based on the mass of the conductive layer, in Examples 1-1 to 1-6 and Comparative examples 1-1 to 1-3, the mass percentages of the first additives are 2.5%, the mass percentages of the second additives are 47.5%, and the mass percentages of the conductive agent are 50%. The mass percentage of the first additive in Comparative example 1-4 is 50%. The mass percentage of the second additive in Comparative example 1-5 is 50%.

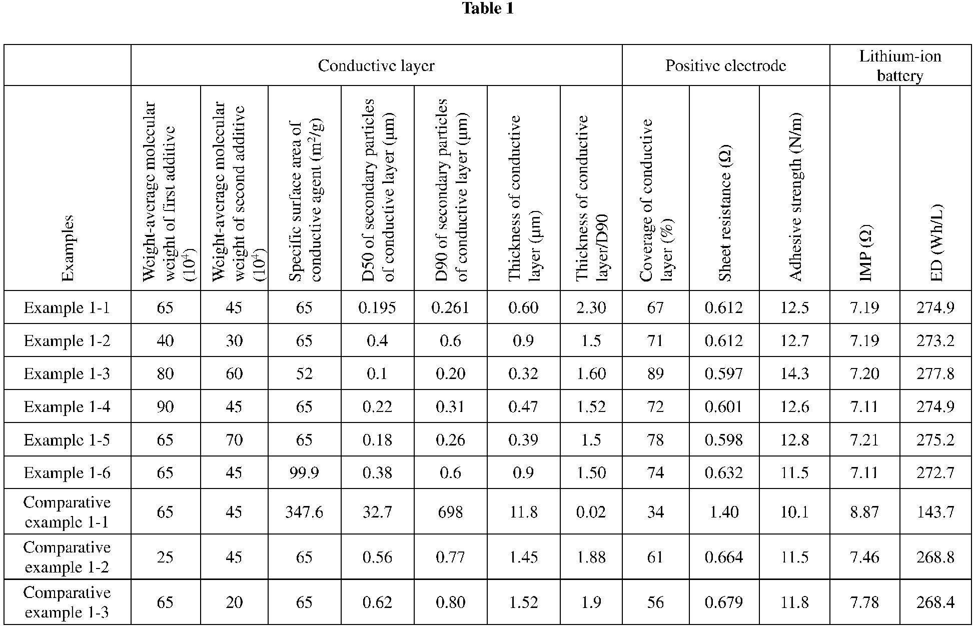

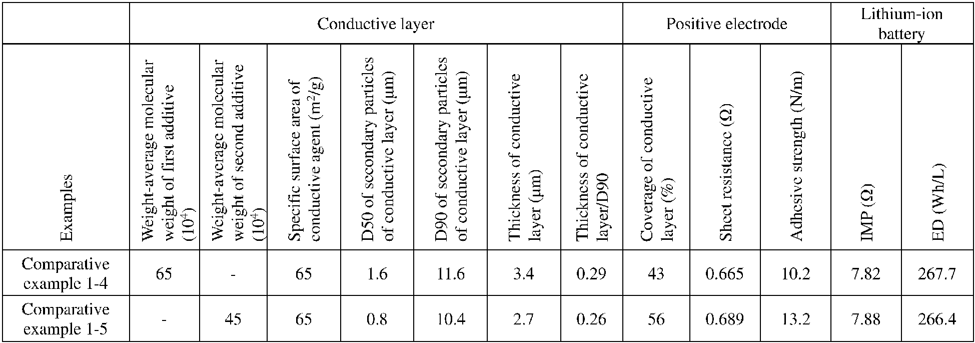

From the data in Example 1-1, Comparative example 1-4, and Comparative example 1-5, it can be seen that when the first additive and the second additive are both added to the conductive layer, the particle size of the secondary particles in the conductive layer is small, the thickness of the conductive layer is small, and the volumetric energy density of the lithium-ion battery is high. This is mainly because both the first additive and the second additive are bonded to the conductive agent agglomerates, and intermolecular forces are present between the first additive and the second additive. The two additives collaborate to form a network bonding structure with different conductive agent agglomerates. Under the action of shear force, this network-like bonding structure can effectively disperse the conductive agent to maintain the particle size of the conductive agent secondary particles in the final conductive layer at a small level.

From the data in Example 1-1, Example 1-4, and Comparative example 1-2, it can be seen that when the molecular weight of the first additive is in the range of 4×10⁵ to 8×10⁵, the lithium-ion batteries have a higher volumetric energy density. From the data in Example 1-1, Example 1-5, and Comparative example 1-3, it can be seen that when the molecular weight of the second additive is in the range of 3×10⁵ to 6×10⁵, the lithium-ion batteries have a higher volumetric energy density. In the conductive layer slurry, the molecular chain segments of the additives can bond with different conductive agent agglomerates. The molecular chain segments bonded to different conductive agent agglomerates, when subjected to the pulling action of shear forces, can separate the conductive agent agglomerates, thereby achieving effective dispersion of the conductive agent. An excessively low molecular weight of the additive, indicating short molecular chain segments and a low quantity of molecular chain segments bonded with the agglomerates, can result in poor dispersion of the conductive agent, leading to a larger particle size of the secondary particles and thereby increasing the thickness of the conductive layer. An excessively large thickness of the conductive layer can reduce the energy density of the battery and increase the internal resistance of the battery, but this is not conducive to improving the kinetic performance of the battery. An excessively large molecular weight of the additive can make the viscosity of the additive too high, resulting in high energy consumption of stirring and poor stirring effect.

From the data in Example 1-1, Example 1-7, and Comparative example 1-1, it can be seen that when the specific surface area of the conductive agent is in the range of 50-100 m²/g, the lithium-ion batteries have a high volumetric energy density and low internal resistance. If the specific surface area of the conductive agent is too small, indicating that the particles of the conductive agent are large, the conductivity may be compromised. If the specific surface area of the conductive agent is too large, intermolecular forces between the conductive agent particles are strong, and this is not conducive to the dispersion of the conductive agent.

Table 2 shows the influences of the mass percentages of the first additive (sodium carboxymethyl cellulose), second additive (sodium polyacrylate), and conductive agent (conductive carbon) on a positive electrode plate prepared and a lithium-ion battery containing the positive electrode plate.

In the examples, the weight-average molecular weight of the first additive is 6.5×10⁵, the weight-average molecular weight of the second additive is 4.5×10⁵, and the specific surface area of the conductive agent is 65 m²/g. The first solid content is 15%, and the second solid content is greater than or equal to 3%. The molecular weight distribution index of the first additive is 1.32, and the molecular weight distribution index of the second additive is 1.57.

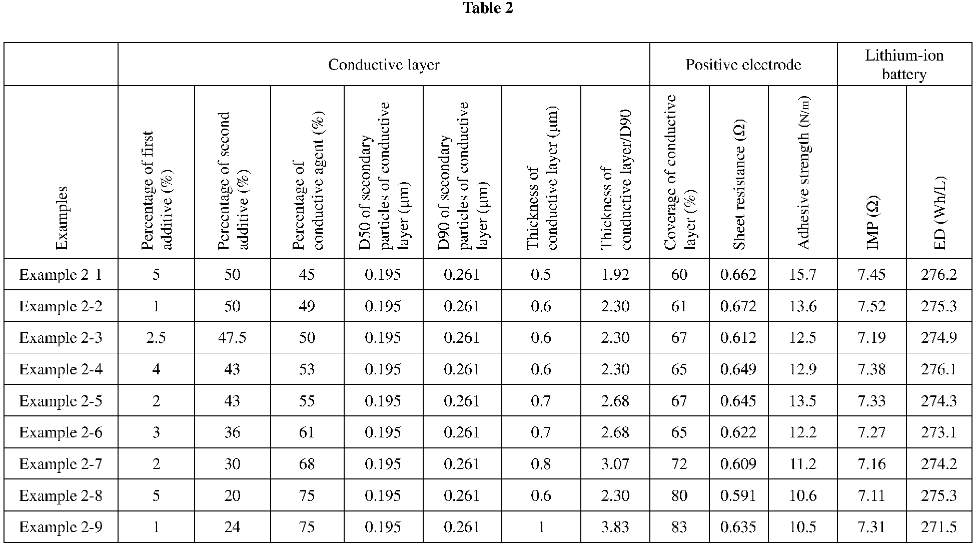

Table 3 shows the influences of the first solid content of the conductive layer slurry on a positive electrode plate prepared and a lithium-ion battery containing the positive electrode plate.

In the examples, the second solid content is 7%, the weight-average molecular weight of the first additive is 6.5×10⁵, the weight-average molecular weight of the second additive is 4.5×10⁵, and the specific surface area of the conductive agent is 65 m²/g. The molecular weight distribution index of the first additive is 1.47, and the molecular weight distribution index of the second additive is 1.52.

Based on the mass of the conductive layer, the mass percentage of the first additive is 2.5%, the mass percentage of the second additive is 47.5%, and the mass percentage of the conductive agent is 50%.

**Table 3**

| Examples | Conductive layer | | | | | Positive electrode | | | Lithium-ion battery | |
|---|---|---|---|---|---|---|---|---|---|---|
| | First solid content (%) | D50 of secondary particles of conductive layer (µm) | D90 of secondary particles of conductive layer (µm) | Thickness of conductive layer (µm) | Thickness of conductive layer/D90 | Coverage of conductive layer (%) | Sheet resistance (Ω) | Adhesive strength (N/m) | IMP (Ω) | ED (Wh/L) |
| Example 3-1 | 13 | 0.298 | 0.553 | 0.87 | 1.81 | 62 | 0.662 | 11.3 | 7.44 | 271.8 |
| Example 3-2 | 15 | 0.195 | 0.261 | 0.60 | 2.30 | 67 | 0.612 | 12.5 | 7.19 | 274.2 |
| Example 3-3 | 17 | 0.175 | 0.245 | 0.54 | 2.20 | 77 | 0.597 | 13.5 | 7.12 | 275.4 |
| Example 3-4 | 25 | 0.171 | 0.244 | 0.51 | 2.09 | 78 | 0.602 | 13.8 | 7.14 | 275.7 |

From the data in Table 3, it can be seen that when the first solid content is in the range of 13-25%, the batteries have better performance. When the conductive agent and additives are stirred and mixed, an excessively low first solid content results in insufficient shear force so that the conductive agent cannot be effectively dispersed. An excessively high solid content makes the load current of the mixer too high and may damage the mixer.

Table 4 shows the influences of the D50 and D90 of the secondary particles of the conductive layer and the thickness of the conductive layer on a positive electrode plate prepared and a lithium-ion battery containing the positive electrode plate. By simultaneously controlling the percentage of each composition in the conductive layer, the first solid content, the stirring time, and the like, it is possible to control the D50 and D90 of the secondary particles of the conductive layer and the thickness of the conductive layer.

In the examples in Table 4, the molecular weight of the first additive is 6.5×10⁵, and the molecular weight of the second additive is 4.5×10⁵. The molecular weight distribution index of the first additive is 1.32, and the molecular weight distribution index of the second additive is 1.57.

Based on the mass of the conductive layer, the mass percentage of the first additive is in the range of 1-5%, the mass percentage of the second additive is in the range of 20-55%, and the mass percentage of the conductive agent is in the range of 40-75%. The first solid content is greater than or equal to 13%, and the second solid content is greater than or equal to 3%.

**Table 4**

| Examples | Conductive layer | | | | | Lithium-ion battery | |
|---|---|---|---|---|---|---|---|
| | D50 of secondary particles of conductive layer (µm) | D90 of secondary particles of conductive layer (µm) | Thickness of conductive layer (µm) | Thickness of conductive layer/D90 | Particle size curve distribution | IMP (Ω) | ED (Wh/L) |
| Example 4-1 | 0.1 | 0.21 | 0.43 | 2.05 | Unimodal | 7.15 | 277.1 |
| Example 4-2 | 0.2 | 0.26 | 0.79 | 3.04 | Unimodal | 7.28 | 276.3 |
| Example 4-3 | 0.3 | 0.45 | 0.84 | 1.87 | Unimodal | 7.24 | 274.5 |
| Example 4-4 | 0.4 | 0.6 | 0.9 | 1.50 | Unimodal | 7.37 | 271.9 |
| Example 4-5 | 0.18 | 0.3 | 0.52 | 1.73 | Unimodal | 7.28 | 275.8 |
| Example 4-6 | 0.26 | 0.4 | 0.81 | 2.03 | Unimodal | 7.42 | 272.8 |
| Example 4-7 | 0.34 | 0.5 | 0.85 | 1.70 | Unimodal | 7.19 | 273.7 |
| Example 4-8 | 0.38 | 0.6 | 0.9 | 1.50 | Unimodal | 7.33 | 270.8 |
| Example 4-9 | 0.1 | 0.2 | 0.3 | 1.50 | Unimodal | 7.12 | 277.5 |
| Example 4-10 | 0.18 | 0.26 | 0.5 | 1.92 | Unimodal | 7.36 | 273.8 |
| Example 4-11 | 0.20 | 0.26 | 0.8 | 3.08 | Unimodal | 7.52 | 276.4 |
| Example 4-12 | 0.4 | 0.6 | 1 | 1.67 | Unimodal | 7.22 | 268.9 |
| Comparative example 4-1 | 1.66 | 11.8 | 3.2 | 0.27 | Bimodal | 8.32 | 256.7 |
| Comparative example 4-2 | 13.7 | 64.7 | 6.3 | 0.10 | Bimodal | 7.97 | 260.2 |

From the example data in Table 4, it can be seen that greater D50 and D90 of the secondary particles of the conductive layer generally represents a greater thickness of the conductive layer. An increase in the thickness of the conductive layer results in higher sheet resistance and sheet adhesive strength, but may lead to a loss in the energy density of the battery.

Although illustrative embodiments have been demonstrated and described, a person skilled in the art should understand that the foregoing embodiments are not to be construed as limiting this application, and that the embodiments may be changed, replaced, and modified without departing from the spirit, principle, and scope of this application.

## Claims

1. An electrochemical apparatus comprising a positive electrode, wherein the positive electrode comprises a current collector, a conductive layer, and an active substance layer, with the conductive layer disposed between the current collector and the active substance layer, wherein the conductive layer comprises secondary particles formed from primary particles of a conductive agent, and D50 of the secondary particles satisfies 0.1 µm ≤ D50 ≤ 0.4 µm.

2. The electrochemical apparatus according to claim 1, wherein D90 of the secondary particles satisfies 0.2 µm ≤ D90 ≤ 0.6 µm.

3. The electrochemical apparatus according to claim 1, wherein the conductive layer further comprises a first additive and a second additive, the first additive comprising at least one of polyether polyol or cellulose ether, and the second additive comprising at least one of a polycarboxylic acid salt, polycarboxylate, or polycarboxylic acid.

4. The electrochemical apparatus according to claim 3, wherein the electrochemical apparatus satisfies at least one of conditions (a) to (c):
(a) a weight-average molecular weight of the first additive is 4×10⁵ to 8×10⁵;
(b) a weight-average molecular weight of the second additive is 3×10⁵ to 6×10⁵; or
(c) molecular weight distribution indexes of the first additive and the second additive are 1-2.

5. The electrochemical apparatus according to claim 3, wherein the polyether polyol comprises at least one of trihydroxy polyether, polyoxyethylene phenyl ether, polyethylene glycol dimethyl ether, or polyether modified glycerol;
the cellulose ether comprises at least one of methyl cellulose, hydroxyethyl methyl cellulose, carboxymethyl cellulose, sodium carboxymethyl cellulose, ethyl cellulose, benzyl cellulose, hydroxyethyl cellulose, hydroxypropyl cellulose, cyanoethyl cellulose, benzyl cyanoethyl cellulose, carboxymethyl hydroxyethyl cellulose, or phenyl cellulose; and
the polycarboxylic acid salt comprises structure unit A, the polycarboxylic acid comprises structure unit B, and the polycarboxylate comprises structure unit C or D, 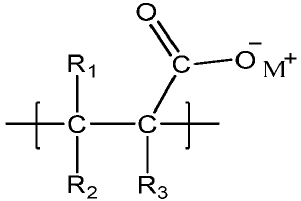 structure unit A 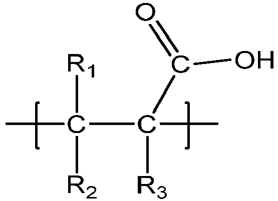 structure unit B 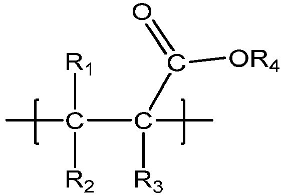 structure unit C 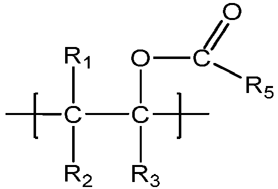 structure unit D
wherein R₁ to R₃ are the same or different and each are independently selected from hydrogen or C₁-C₆ alkyl, R₄ and R₅ are the same or different and each are selected from C₁-C₆ alkyl or hydroxyl-substituted C₁-C₆ alkyl, and M is selected from alkali metals.

6. The electrochemical apparatus according to claim 3, wherein the polycarboxylic salt comprises at least one of sodium polyacrylate or sodium polymethacrylate, the polycarboxylic acid comprises at least one of polyacrylic acid or polymethacrylic acid, and the polycarboxylate comprises at least one of polyvinyl acetate, poly(2-hydroxyethyl methacrylate), or poly(isobutyl methacrylate).

7. The electrochemical apparatus according to claim 3, wherein the electrochemical apparatus satisfies at least one of condition (d) or (e):
(d) the conductive agent comprises at least one of conductive carbon black, acetylene black, carbon fiber, carbon nanotubes, or Ketjen black; or
(e) a specific surface area of the conductive agent is 50-100 m²/g.

8. The electrochemical apparatus according to claim 3, wherein based on a total mass of the conductive layer, a mass percentage of the conductive agent is 40-75%, a mass percentage of the first additive is 1-5%, and a mass percentage of the second additive is 20-55%.

9. The electrochemical apparatus according to claim 3, wherein a mass ratio of the first additive to the second additive is 1:4-1:50.

10. The electrochemical apparatus according to claim 3, wherein preparation of the conductive layer comprises the following steps:
step A: mixing the conductive agent, the first additive, the second additive, and a solvent at a first solid content to obtain a conductive layer slurry, and
step B: diluting the conductive layer slurry obtained in step A to a second solid content, and then applying a resulting conductive layer slurry on the current collector,
wherein the first solid content is 13-30%, and the second solid content is greater than or equal to 3%.

11. The electrochemical apparatus according to claim 1, wherein the conductive layer satisfies at least one of the following conditions (f) to (h):
(f) a thickness T of the conductive layer is 0.3-1.0 µm;
(g) a thickness T of the conductive layer and the D90 of the secondary particles satisfy T ≥ 1.5×D90; or
(h) a particle size distribution curve of the conductive layer is a unimodal distribution.

12. The electrochemical apparatus according to claim 1, wherein the positive electrode satisfies at least one of the following conditions (i) to (l):
(i) coverage of the conductive layer is 60-100%;
(j) a coating weight of the conductive layer is 0.01-0.04 mg/cm²;
(k) sheet resistance of the positive electrode is 0.05-5 S2; or
(1) adhesion between the conductive layer and the active substance layer is 10-50 N/m.

13. An electronic apparatus, comprising the electrochemical apparatus according to any one of claims 1 to 12.
